# EUROPÄISCHE PATENTSCHRIFT

(11) **EP 0 569 743 B1**
(45) Veröffentlichungstag und Bekanntmachung des Hinweises auf die Patenterteilung: **08.10.1997**
(21) Anmeldenummer: 93106450.5
(22) Anmeldetag: 21.04.1993
(51) Int. Cl.: E06B 9/76

(54) **Abdeckkörper**
Cover body
Corps de recouvrement

(30) Priorität: 13.05.1992 DE 9206451 U
(43) Veröffentlichungstag der Anmeldung: 18.11.1993
(73) Patentinhaber: ANTRIEBSTECHNIK GERHARD GEIGER GmbH & Co., 74321 Bietigheim-Bissingen (DE)
(72) Erfinder: Grüdl, Josef, W-7121 Löchgau (DE)
(74) Vertreter: Jeck, Anton, Dipl.-Ing.

(56) Entgegenhaltungen:
- CH-A- 672 349
- DE-A- 3 024 419
- DE-U- 9 203 977
- FR-A- 2 653 820

## Beschreibung

Die Erfindung betrifft einen Abdeckbeschlag nach dem Oberbegriff des Anspruches 1.

Abdeckbeschläge der eingangs genannten Art sind bekannt und z.B. in der CH-A 672 349 beschrieben. Dabei besitzt die Abdeckplatte einen rechteckigen Grundriß und in Längsrichtung verlaufende Soll-Trennstelen sowie rechtwinklig dazu eine Soll-Biegestelle. Dadurch ist es möglich, deren Breite sowie Auflagefläche dem vorhandenen Befestigungsplatz anzupassen. Die bekannte Abdeckplatte ist insbesondere mit dem Nachteil behaftet, daß die Wandduchführung so genau gefertigt werden muß, daß es zu keiner örtlichen Verstellung der Abdeckplatte nach Herstelung der Wanddurchführung mehr kommen darf, was in der Regel nur mit erheblichem Aufwand möglich ist.

Schließlich ist in der FR-A 2 653 820 A1 ist ein Gelenklager für eine Kurbelstange von Storen- und Rolladenantrieben offenbart, bei der das Abdeckteil mit dem Halter über Rastverbindungnen (Anker und Aussparungen) lösbar verbindbar ist. Bei höherer Belastung und üblicher Handhabung ist nicht auszuschließen, daß das Abdeckteil des Gelenklagers sich vom Halter löst.

Ausgehend von dem obigen Stand der Technik, liegt der Erfindung die Aufgabe zugrunde, hier Abhilfe zu schaffen und den gattungsgemäßen Abdeckbeschlag so weiterzubilden, daß die Anbringung des Abdeckbeschlages äußerst einfach ist.

Die gestellte Aufgabe wird erfindungsgemäß durch die Merkmale des Anspruches 1 gelöst.

Man erkennt, daß die Erfindung jedenfalls dann verwirklicht ist, wenn es sich um einen vorzugsweise aus zwei Teilen bestehenden Abdeckbeschlag handelt, von denen das eine Teil, das mit der Wand verbindbar ist, als Träger für das Abdeckteil ausgebildet ist.

Weitere zweckmäßige und vorteilhafte Ausgestaltungen der Erfindung gehen aus den Unteransprüchen hervor.

Eine zweckmäßige Ausgestaltung sieht vor, daß der Halter ein gestreckter Körper ist. Dabei können diese Maßnahmen auch so getroffen sein, daß der Halter in Aufsicht rechteckförmig ist.

Ferner ist vorgesehen, daß der Halter Durchführungen für Befestigungsmittel aufweist. Der als Trägerplatte ausgebildete Halter ist mit der Wand fest verbindbar, wobei diese Verbindung insbesondere mittels Schrauben herstellbar ist.

Ausführungsbeispiele der Erfindung sind in der Zeichnung schematisch dargestellt und werden im folgenden näher erläutert. Es zeigen
- Fig. 1: einen Abdeckkörper mit einer Kurbelstange,
- Fig. 2: eine Abdeckplatte mit einer Bohrerführung,
- Fig. 3: eine Abdeckplatte,
- Fig. 4: ein Abdeckteil in Bodenansicht,
- Fig. 5: einen Schnitt entlang der Linie V - V nach Fig. 4,
- Fig. 6: eine Draufsicht des Abdeckteils nach Fig. 4,
- Fig. 7: einen Schnitt entlang der Linie VII - VII nach Fig. 6,
- Fig. 8: einen Schnitt entlang der Linie VIII - VIII nach Fig. 10,
- Fig. 9: eine Ansicht in Richtung des Pfeiles IX nach Fig. 10,
- Fig. 10: einen Halter in Draufsicht,
- Fig. 11: eine Hälfte eines Gelenkkörpers und
- Fig. 12: den in Fig. 11 dargestellten Gelenkkörper in Seitenansicht und teilweise geschnitten.

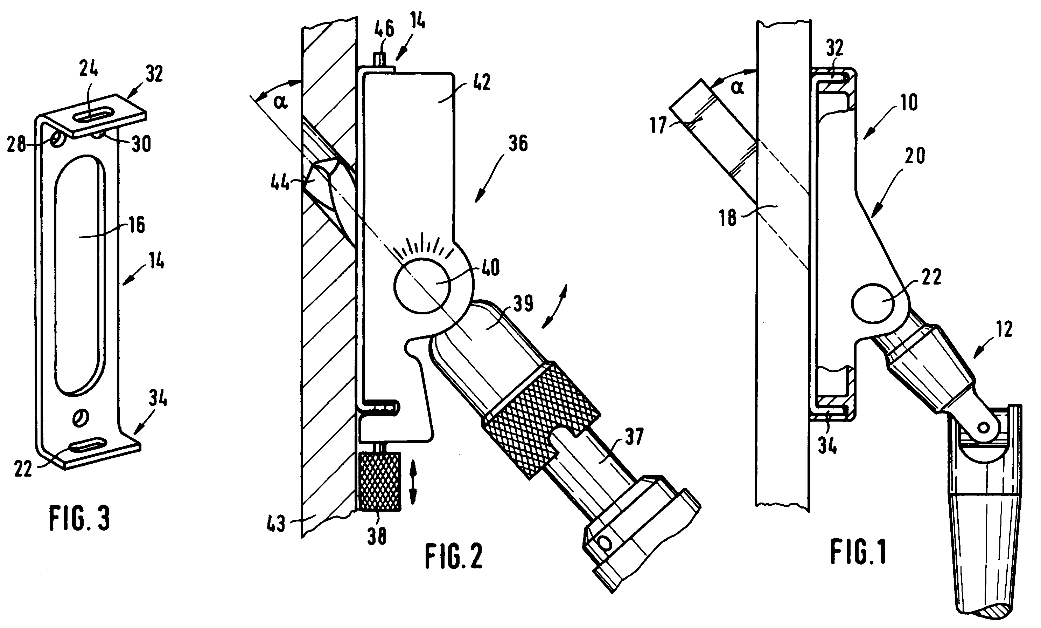

In Fig. 1 bis 3 ist zur allgemeinen Erläuterung ein Abdeckkörper 10 für eine Wanddurchführung 18 einer Kurbelstange 12 dargestellt, die mit dem Abdeckkörper 10 betrieblich verbindbar ist. Der Abdeckkörper 10 besteht, aus einer einen Längsschlitz 16 für die Kurbelstange 12 aufweisenden Abdeckplatte 14 (vgl. Fig. 3) sowie einem Gelenkorgan 20, das mit der Abdeckplatte 14 betrieblich verbindbar ist. Die Abdeckplatte 14 kann mit dem Gelenkorgan 20 durch Rast-, Schnapp-, Steck- oder Schraubverbindungen verbunden werden. Man erkennt, daß die Abdeckplatte 14 ein gestreckter Körper mit endseitig angeformten und von der Wand weisenden Schenkeln 32 und 34 ist, die mit dem Gelenkorgan 20 in Wirkverbindung bringbar sind. In ihrer Aufsicht ist die Abdeckplatte 14 rechteckförmig, wobei der Längsschlitz 16 sich von dem einen Schenkel 32 bis zum anderen Schenkel 34 hin erstreckt. Ferner läßt die Fig. 3 erkennen, daß die Abdeckplatte 14 Durchführungen 20, 28, 30 für Befestigungsmittel (nicht dargstellt) aufweist. In den Schenkeln 32 und 34 der Abdeckplatte 14 sind Ausnehmungen 22, 24 ausgebildet, die zur lösbaren Verbindung mit einer Bohrerführung 36 (vgl. Fig. 2) vorgesehen sind. Die Bohrerführung 36 besitzt einen Haltekörper 42 sowie ein Rohr 39, das um die Achse 40 in Richtung des Doppelpfeiles verschwenkbar ist. Die Achse des Rohres 39 durchquert den Längsschlitz 16 sowie die Wand 43 unter einem definierten Winkel α, der einstellbar ist. Der Haltekörper 42 besitzt in seinem unteren Bereich eine Befestigungsschraube 38, die die Ausnehmung 22 durchquert. Im oberen Bereich besitzt der Haltekörper 42 einen Stift 46, der die Öffnung 24 durchquert. Durch diese zwei Befestigungsmittel ist eine betriebsgemäße Verbindung zwischen der Abdeckplatte 14 und der Bohrerführung 36 herstellbar. Danach wird in das Führungsrohr 39 ein Bohrer 44 eingeführt, der z.B. von einer Handbohrmaschine getragen ist. Der Durchmesser des Rohres 39 ist auf den Steckstab 17 der Kurbelstange 12 abgestimmt.

Bei der Anbringung des Abdeckkörpers 10 kann wie folgt vorgegangen werden:

Die Abdeckplatte 14 wird an der vorgesehenen Stelle angeordnet und an der Wand 43 mittels Schrauben befestigt. Daraufhin wird die Bohrerführung 36 mit der Abdeckplatte 14 verbunden, wie in Fig. 2 dargstellt, und eine Wanddurchführung 18 hergestellt. Da das Rohr 39 um die Achse 40 verschwenkbar ist, kann der Winkel ∝ nach Bedarf eingestellt werden. Nach Herstellung der Wanddurchführung 18 wird die Bohrerführung von der Abdeckplatte 14 gelöst und durch das Abdeckorgan 20 ersetzt. Dabei wird in die Wanddurchführung 18 der Steckstab 17 der Kurbelstange 12 eingeführt.

Die vorgeschlagenen Maßnahmen bringen insbesondere folgende Vorteile mit sich:
- der Schlitz in der Trägerplatte verhindert ein Ausweichen des Rohres und somit ein Ausbrechen der Anbohrstelle. Dabei kan eine Bohrlehre den Bohrvorgang noch weiter erleichtern,
- leichteres Montieren des Gelenkorganes (Platte) durch Einklipsen in die Trägerplatte.

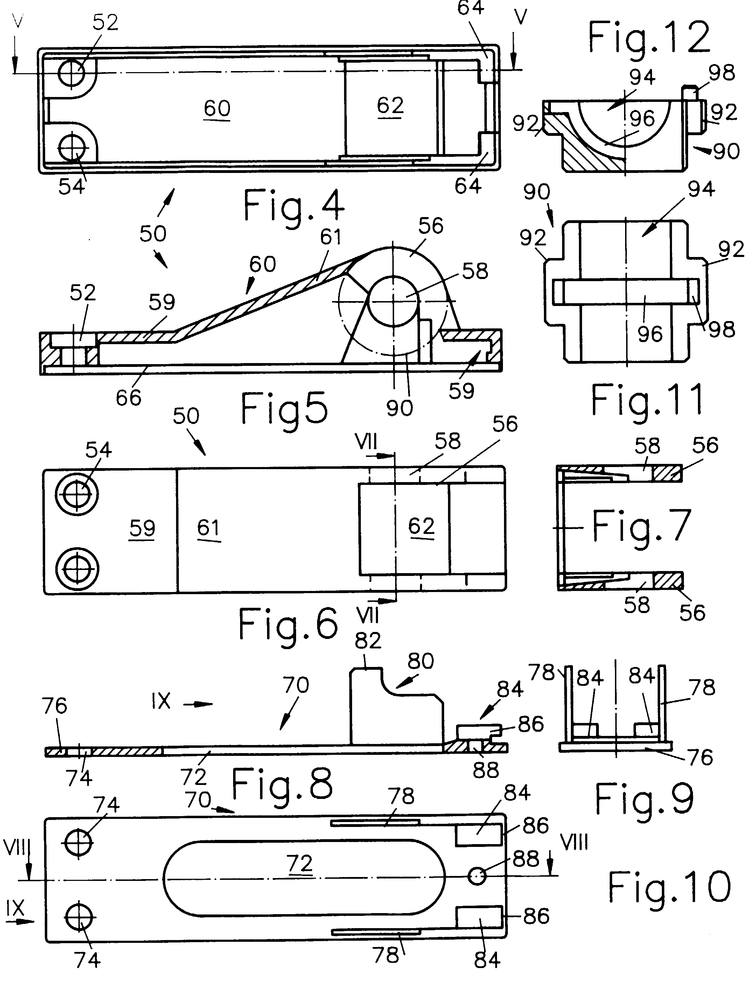

In den Figuren 4, 5, 6 und 7 ist gemäß der Erfindung ein Abdeckteil 50 dargestellt, das mit dem Halter 70, wie er in den Figuren 8, 9 und 10 dargestellt ist, betrieblich verbindbar ist. Das Abdeckteil 50 besteht aus einem Grundkörper 60, der die Deckseite bildet und die Wände 59 und 61 aufweist. In der schräg abfallenden Wand 61 ist eine Ausnehmung 62 für einen Gelenkkörper 90 vorgesehen, wie er in den Figuren 11 und 12 dargestellt ist. Die Wand 61 ist seitlich von zwei Wänden flankiert, die in Schenkel 56 mit Bohrungen 58 auslaufen. In die Bohrungen 58 sind Zapfen 92 des Gelenkkörpers 90 einsteckbar. In der Wand 59 sind zwei Bohrungen 62 und 54 für nicht dargestellte Befestigungsmittel vorgesehen. In der Bodenseite des Gelenkorgans 50 ist eine umlaufende Nut 66 ausgebildet, in welche der Halter 70 (vgl. Figuren 8, 9 und 10) formschlüssig einbringbar ist. In der einen Stirnseite des Gelenkorgans 60 sind zwei Rücksprünge 63 mit jeweils einem Hinterschnitt 59 ausgebildet, in welche zwei Vorsprünge 84 mit Nasen 86 einsteckbar sind. Der Halter 70 besitzt zwei Bohrungen 74, die mit den Bohrungen 52 und 54 fluchten, sowie eine Bohrung 88, in welche ein nicht näher dargestelltes Befestigungsmittel, z.B. eine Schraube, einbringbar ist. Im Halter 70 ist etwa mittig ein Längsschlitz 72 für einen Steckstab angeformt, der einen ebenen Abschnitt 82 sowie einen konkaven Abschnitt 80 aufweist. Die Schenkel 78 sind komplementär zu den Schenkeln 56 ausgebildet, so daß der Gelenkkörper 90, der in den Figuren 11 und 12 vergrößert dargestellt ist, in den Abdeckbeschlag einfach einbringbar ist. Der Halter 70 ist im wesentlichen von einer Grundplatte 76, den Schenkeln 78 und den Vorsprüngen 84 gebildet.

Der in den Figuren 11 und 12 dargestellte Gelenkkörper 90 besteht aus zwei fast identischen Teilen, die im zusammengebauten Zustand zylinderförmig sind und zwei Halbzapfen 92, eine im Querschnitt halbkreisfömige Bohrung 94 sowie eine Innenringnut 96 aufweisen. Das eine Teil des Gelenkkörprs 90 besitzt eine Ausnehnmung, während das andere Teil einen Vorsprung 98 aufweist, der in die nicht näher dargestellte Ausnehmung formschlüssig eingreift. Die Innenringnut 96 ist für einen äußeren Bund des in Fig. 1 dargestellten Steckstabes 17 vorgesehen. Somit ist der Steckstab 17 zum einen um seine Längsachse verdrehbar und zum anderen um die Achse der Zapfen 92 verschwenkbar.

Beim Zusammenbau dieses Abdeckbeschlages kann wie folgt vorgegangen werden:

Der Steckstab 17 wird in den Gelenkkörper 90 eingelegt und dieser sodann mit dem Abdeckteil 50 betrieblich verbunden, indem die Zapfen 92 in die Bohrungen 58 eingeführt und dort gelagert werden. Der Halter 70 wird an der vorgesehenen Stelle der Wand befestigt, und zwar mittels einer Schraube, die die Bohrung 88 durchquert. Sodann wird das Gelenkorgan 50 mit dem Halter 70 verbunden, indem die Vorsrünge 84 mit Nasen 86 in die Rücksprünge 59 eingreifen. Dabei durchquert der Steckstab den Längsschlitz 72. Sodann werden durch die Bohrungen 52, 64 und 74 zwei Schrauben geführt und mit der Wand fest verbunden. Die durch die Bohrung 88 geführte Schraube ist abgedeckt und von außen her nicht wahrnehmbar. Bei der Demontage des Abdeckbeschlages nach Fig. 4 bis 10 wird gerade andersrum vorgegangen werden.

## Patentansprüche

1. Abdeckbeschlag für die Abdeckung einer Wanddurchführung und für die Lagerung einer drehbaren Betätigungsstange eines Antriebes, eines Rolladens oder ähnlichem, wobei der Beschlag einen mit der Wand verbindbaren Halter (70) mit einem Lagerschlitz (72) und ein Abdeckteil (50) mit zum Halter (70) hin sich erstreckenden Schenkeln aufweist, die ein Gelenklager für einen mit Zapfen (92) versehenen Gelenkkörper (90) der Betätigungsstange (17) definieren, und wobei das Abdeckteil (50) mit dem Halter (70) durch Rast-, Schnapp- oder Steckverbindungen verbindbar ist,
dadurch gekennzeichnet,
daß die Schenkel (56) jeweils eine zylindrische Öffnung (58) aufweisen, in die der Gelenkkörper (90) mit seinem Zapfen (92) bei der Montage des Beschlages einlegbar ist, und daß das Abdeckteil (50) und der Halter (70) miteinander fluchtende Bohrungen (52, 74) für in die Wand einschraubbare Schrauben aufweisen, die in bezug auf die Verbindungsmittel (86) der Rast-, Schnapp- oder Steckverbindungen auf der gegenüberliegenden Seite des Abdeckteils (50) ausgebildet sind.

2. Abdeckbeschlag nach Anspruch 1,
dadurch gekennzeichnet,
daß der Halter (70) ein gestreckter Körper mit endseitig angeformten und von der Wand weisenden Schenkeln (32,34) ist, die mit dem Gelenkorgan (20) in Wirkverbindung bringbar sind.

3. Abdeckbeschlag nach einem der Ansprüche 1 oder 2,
dadurch gekennzeichnet,
daß der Halter (70) in Aufsicht rechteckförmig ist.

4. Abdeckbeschlag nach einem der Ansprüche 1 bis 3,
dadurch gekennzeichnet,
daß der Halter (70) und das Abdeckteil (50) aus Kunststoff oder Metall bestehen.

5. Abdeckbeschlag nach einem der Ansprüche 1 bis 4,
dadurch gekennzeichnet,
daß der Halter (70) Vorsprünge (84) mit Nasen (86) besitzt, die in Ausnehmungen (59) des Abdeckteils (50) einsteckbar und mit diesen lösbar verbindbar sind.

6. Abdeckbeschlag nach einem der Ansprüche 1 bis 5,
dadurch gekennzeichnet,
daß die Nasen (86) sich in Richtung des Halters (70) erstrecken.

7. Abdeckbeschlag nach einem der Ansprüche 5 oder 6,
dadurch gekennzeichnet,
daß die Nasen (86) sich in Richtung des Halters (70) erstrecken,

8. Abdeckbeschlag nach einem der Ansprüche 1 bis 7,
dadurch gekennzeichnet,
daß der Gelenkkörper (90) aus zwei Teilen (91) besteht und mit dem Steckstab lösbar verbindbar ist.

## Claims

1. Cover for covering a wall entrance and for the mounting of a rotatable actuating rod for a drive, a roller blind or the like, the cover having a holder (70), which is connectable to the wall and is provided with a mounting slot (72), and a cover portion (50) with flanges which extend towards the holder (70) and define a pivotal mounting support for a pivotal body (90) of the actuating rod (17), which pivotal body is provided with pins (92), and the cover portion (50) being connectable to the holder (70) by means of locking connections, snap-in connections or plug-in connections, characterised in that the flanges (56) each have a cylindrical aperture (58), into which the pivotal body (90) is insertable with its pin (92) for the assembly of the cover, and in that the cover portion (50) and the holder (70) have bores (52, 74), which are in alignment with each other, for screws which can be screwed into the wall and are provided on the oppositely situated side of the cover portion (50) relative to the connecting means (86) of the locking connections, snap-in connections or plug-in connections.

2. Cover according to claim 1, characterised in that the holder (70) is an elongate body having flanges (32, 34) which are moulded to fit on the ends and point away from the wall, said flanges being able to be brought into active communication with the pivotal member (20).

3. Cover according to one of claims 1 or 2, characterised in that, when viewed from above, the holder (70) is rectangular.

4. Cover according to one of claims 1 to 3, characterised in that the holder (70) and the cover portion (50) are formed from plastics material or metal.

5. Cover according to one of claims 1 to 4, characterised in that the holder (70) has projection members (84) with projections (86), which are insertable into recesses (59) in the cover portion (50) and are detachably connectable thereto.

6. Cover according to one of claims 1 to 5, characterised in that the projections (86) extend towards the holder (70).

7. Cover according to one of claims 5 or 6, characterised in that the projections (86) extend towards the holder (70).

8. Cover according to one of claims 1 to 7, characterised in that the pivotal body (90) comprises two portions (91) and is detachably connectable to the insert bar.

## Revendications

1. Ferrure de recouvrement pour le recouvrement d'un passage mural et pour le montage d'une tige de commande rotative d'un mécanisme de commande, d'un store ou similaire, le corps de recouvrement présentant un support (70) pouvant être fixé au mur avec une fente de montage (72) et un élément de recouvrement (50) avec des ailes s'étendant jusqu'au support (70), ailes qui définissent un palier d'articulation pour un corps d'articulation (90) doté de tourillons (92) de la tige de commande (17), l'élément de recouvrement (50) pouvant être connecté au support (70) par des liaisons à encliquetage, à déclic ou à enfichage,
caractérisée
en ce que les ailes (56) présentent chacune une ouverture cylindrique (58) dans lesquelles le corps d'articulation (90) avec ses tourillons (92) peut être placé lors de l'assemblage de la ferrure, et en ce que l'élément de recouvrement (50) et le support (70) présentent des forures (52, 74) en alignement mutuel pour des vis à visser dans le mur, forures qui par rapport aux moyens de liaison (86) des liaisons à encliquetage, à déclic ou à enfichage sont pratiquées sur le côté opposé de l'élément de recouvrement (50).

2. Ferrure de recouvrement suivant la revendication 1,
caractérisée
en ce que le support (70) est une pièce allongée avec des ailes (32, 34) formées aux extrémités et s'éloignant du mur, ailes qui peuvent être mises en engagement mécanique avec l'organe d'articulation (20).

3. Ferrure de recouvrement suivant la revendication 1 ou 2,
caractérisée
en ce que vu en plan, le support (70) est de forme rectangulaire.

4. Ferrure de recouvrement suivant l'une quelconque des revendications de 1 à 3,
caractérisée
en ce que le support (70) et l'élément de recouvrement (50) sont en matière plastique ou en métal.

5. Ferrure de recouvrement suivant l'une quelconque des revendications de 1 à 4,
caractérisée
en ce que le support (70) présentent des protubérances (84) avec des cames (86), qui peuvent être fichées dans des évidements (59) de l'élément de recouvrement (50) et qui y sont reliées de manière amovible.

6. Ferrure de recouvrement suivant l'une quelconque des revendications de 1 à 5,
caractérisée
en ce que les cames (86) s'étendent dans la direction du support (70).

7. Ferrure de recouvrement suivant l'une ou l'autre des revendications 5 et 6,
caractérisée
en ce que les nez (86) s'étendent en direction du support (70).

8. Ferrure de recouvrement suivant l'une quelconque des revendications de 1 à 7,
caractérisée
en ce que l'organe d'articulation (90) est composé de deux parties (91) et peut être reliée de manière amovible avec la barre d'enfichage.
